# EUROPÄISCHE PATENTANMELDUNG

(11) **EP 1 997 658 A2**
(43) Veröffentlichungstag der Anmeldung: **03.12.2008**
(21) Anmeldenummer: 08008005.4
(22) Anmeldetag: 25.04.2008
(51) Int. Cl.: B60J 5/06, B60J 7/06, B62D 21/09, B62D 33/04

(54) **Planenaufbau für ein Lastfahrzeug**

(30) Priorität: 31.05.2007 DE 202007007761 U
(71) Anmelder: Schmitz Cargobull AG, 48341 Altenberge (DE)
(72) Erfinder: Stegemann, Georg, 48369 Saerbeck (DE)
(74) Vertreter: Cohausz & Florack

(57) **Zusammenfassung**

Die Erfindung betrifft einen Planenaufbau (1) für ein Lastfahrzeug, umfassend ein Chassis mit Hauptchassisträgern (2), Außenrahmenprofilen (3) und Bodenquerträgern (4), sowie oberhalb der Außenrahmenprofile(3) parallel zu diesen verlaufende Dachholme (5), und an den Seiten des Lastfahrzeugs zwischen Außenrahmenprofilen (3) und profilartigen Dachholmen (5) vertikal angeordnete Mittelrungen (6) und an den Ecken des Fahrzeugs angeordnete Eckrungen (7). Die Dachholme (5) umfassen mindestens eine jeweils mit dem Dachholm (5) an- oder eingesetzte Versteifungsleiste (8), die parallel zu den Dachholmen (5) liegt.

## Beschreibung

Die Erfindung betrifft einen Planenaufbau für ein Lastfahrzeug, umfassend ein Chassis mit Hauptchassisträgern, Außenrahmenprofilen und Bodenquerträgern, sowie oberhalb der Außenrahmenprofile parallel zu diesen verlaufende Dachholme, und an den Seiten des Lastfahrzeugs zwischen Außenrahmenprofilen und profilartigen Dachholmen vertikal angeordnete Mittelrungen und an den Ecken des Fahrzeugs angeordnete Eckrungen.

Es sind bereits verschiedene Planenaufbauten für Straßen- und Schienenfahrzeuge sowie für Container bekannt, die so konstruiert sind, dass Ladung sicher transportiert wird.

Außerdem soll eine Be- und Entladung flexibel erfolgen können, nämlich im besten Falle von allen Seiten des Lastfahrzeuges.

So gibt es beispielweise Planenaufbauten für Lastfahrzeuge mit einem Chassis mit Hauptchassisträgern, Außenrahmenprofilen und Bodenquerträgern, sowie oberhalb der Außenlangträger parallel zu diesen verlaufende Dachholme, und vertikal angeordneten Mittelrungen über die eine Plane gezogen wird. Die Versteifung dieser Planenaufbauten erfolgt über fest montierte Versteifungsstreben, die parallel oder über Kreuz zwischen den parallel laufenden Dachholmen angeordnet sind oder durch Aufsetzen eines festen Daches. Es sind auch Planenaufbauten mit einem Seilgeflecht zwischen den Dachholmen bekannt.

Eine weitere Möglichkeit der Versteifung eines Planaufbaus zeigt die DE 101 24 283 C1. Aus dieser Druckschrift ist ein Planenaufbau bekannt der durch in X-Form angeordnete, zwischen den Dachholmen liegenden Versteifungsstreben stabilisiert wird, die an einem Dachholm fest montiert sind und mit dem parallel laufenden Dachholm längsverschiebbar verbunden sind.

Bei den bekannten Planenaufbauten stellt sich das Problem, dass die Versteifungskonstruktionen zwischen den Dachholmen verschleißanfällig und teuer sind, insbesondere in der Ausführung mit dem Seilgeflecht. Zudem ist problematisch, dass bei einem Be- oder Entladevorgang von oben, die Versteifungsstreben oder das Seilgeflecht zuvor entfernt werden müssen, oder sogar bei festen Dachkonstruktionen ein Ladevorgang von oben überhaupt nicht durchführbar ist.

Der vorliegenden Erfindung liegt daher die Aufgabe zugrunde, einen kostengünstigen Planenaufbau für ein Lastfahrzeug zur Verfügung zu stellen, der durch eine neuartige Konstruktion ausreichend zum sicheren Transport von Gütern stabilisiert ist, wobei die Fläche zwischen den Dachholmen für eine Beladung des Lastfahrzeuges von oben ohne Umbaumaßnahmen am Planenaufbau zugänglich bleibt.

Erfindungsgemäß wir die voranstehende Aufgabe durch einen Planenaufbau mit den Merkmalen des Anspruchs 1 gelöst. Danach ist ein Planenaufbau für ein Lastfahrzeug der eingangs genannten Art derart ausgestaltet, dass die Dachholme mindestens eine jeweils mit den Dachholmen an- oder eingesetzte Versteifungsleiste umfassen, die parallel zu den Dachholmen liegt.

In erfindungsgemäßer Weise ist erkannt worden, dass sich ein Planenaufbau ausreichend stabilisieren lässt, indem mindestens eine Versteifungsleiste an oder in jedem Dachholm zur Versteifung der Konstruktion verbaut wird. In Verbindung mit den Hauptchassisträgern, die über Bodenquerträger mit dem Außenrahmenprofil verbunden sind, und an den Querträgern über das Außenrahmenprofil Mittelrungen angeordnet sind, die in Kontakt mit den Dachholmen stehen, wird durch die Versteifung der Dachholme schon mit einer Versteifungsleiste, die in die als Hohlprofilkörper ausgebildeten Dachholmen eingeführt oder an diese angeschlagen wird, eine Stabilität des Planenaufbaus erreicht, die der der bekannten Planenaufbauten gleicht.

Dadurch, dass die Versteifungsleisten parallel zu den Dachholmen angeordnet sind, bleibt zudem die Fläche zwischen den parallel laufenden Dachholmen frei, so dass eine Be- oder Entladung des Lastfahrzeuges auch von oben erfolgen kann, ohne Umbaumaßnahmen am Planenaufbau vornehmen zu müssen. Darüber hinaus lässt sich die Stabilität des Planenaufbaus noch erhöhen, indem eine zweite oder dritte Versteifungsleiste in die als Hohlprofilkörper ausgebildeten Dachholme eingesetzt wird, oder mindestens eine Versteifungsleiste in die Dachholme eingesetzt und eine weitere Versteifungsleiste an die Innenseite oder die Außenseite des Dachholms angeschlagen wird.

Folglich ist ein kostengünstiger Planenaufbau für ein Lastfahrzeug zur Verfügung gestellt, der durch seine neuartige Konstruktion ausreichend zum sicheren Transport von Gütern stabilisiert ist, und bei dem die Fläche zwischen den Dachholmen für eine Beladung des Lastfahrzeuges von oben ohne Umbaumaßnahmen am Planenaufbau zugänglich bleibt.

In vorteilhafter Weise lässt sich eine Gewichtsreduzierung bei ausreichender Stabilität der Konstruktion erzielen, indem die Versteifungsleisten im Mittelbereich der Dachholme zwischen zwei im Abstand zu den Eckrungen stehenden Mittelrungen eingesetzt sind, also nicht über die gesamte Länge des Planenaufbaus laufen. Ist eine solche Gewichtsreduzierung nicht notwendig, bietet es sich an, die Versteifungen über die gesamt Länge der Dachholme verlaufen zu lassen, um eine erhöhte Stabilität des Planenaufbaus zu erreichen.

Vorzugsweise sind die Hohlprofile der Dachholme so ausgebildet, dass sie zusätzlich zur Aufnahme von Versteifungsleisten in einem oder mehreren Hohlräumen auch als Laufschienen für mit Rollen versehene Planenspriegel dienen, was zu einer Gewichtseinsparung gegenüber bekannten Planenaufbauten führt, bei denen eine zusätzliche Laufschiene neben den Dachholmen vorgesehen ist.

Um im Fahrzustand eine optimale Kraftverteilung von den Hauptchassisträgern über die Bodenquerträger und die Mittelrungen zu erzielen, die über das Außenrahmprofil laufen und in Kontakt mit den durch die Versteifungsleisten versteiften Dachholme stehen, sollten die Mittelrungen exakt auf der Höhe der Bodenquerträger angeordnet sein. Ganz allgemein ist mit den genannten und miteinander verbundenen Bauteilen ein umlaufender Konturverlauf ausgebildet, der zur Kraftübertragung dient.

Für eine einfache und verschleißunanfällige Konstruktion bietet es sich an, Versteifungsleisten aus Stahl oder Aluminium zu verwenden. Es sind natürlich auch andere Werkstoffe zur Ausbildung der Versteifungsleisten denkbar, wie zum Beispiel Kevlar, Kohlefasern und andere Verbundstoffen. Dies würde allerdings zu einer teuren Plaennaufbaukonstruktion führen, die allerdings gegenüber den bekannten Aufbauten extrem gewichtsreduziert wäre.

Für eine zusätzliche Stabilität des Planenaufbaus bietet es sich zu den schon genannten Versteifungsmaßnahmen an, wenigstens ein Ende des Aufbaus mit festen Wänden, Türen oder mit Planenendstücken mit Diagonalverband zu versehen. Dies bietet zudem bei der Ausführung mit Türen, durch Öffnen der Türen einen leichteren Zugang in das Innere des Aufbaus. Zudem ist der Planenaufbau verschließbar und verhindert so ein unbefugtes Eindringen, zumindest über die durch verschließbare Türen oder feste Wände ausgebildeten Enden.

Zur Gewichtsreduzierung des Chassis ist es denkbar, die Bodenquerträger zwischen den Hauptchassisträgern und dem Außenrahmenprofilen anzuordnen, also die parallel laufenden Hauptschassisträger nicht durch die Bodenquerträger zu verbinden.

Als besonders vorteilhaft eignet sich zur Verbindung der Querträger und der Außenrahmenprofile ein als nach oben geöffneter Haken ausgebildeter Anschlag mit Aussparung und Verbindungspunkten zu dem Querträger und dem Außenrahmenprofil, der zum einen zur Aufnahme der Mittelrungen dient und zum anderen zur Befestigung der Plane dient.

Ganz allgemein ist somit ein Nachrüsten von Planenaufbauten denkbar, wobei diese bezüglich vorhandener Stabilisierungselement zurückgebaut und durch die erfindungsgemäße Konstruktion, diesbezüglich durch An- oder Einsetzen der Versteifungsleiste stabilisiert werden könnten.

Ausführungsbeispiele der Erfindung sind in der Zeichnung dargestellt. Die Figuren der Zeichnung zeigen im Einzelnen:
- Figur 1: einen Planenaufbau für ein Lastfahrzeug in einer perspektivischen Darstellung mit Versteifung im Mittelbereich des Aufbaus;
- Figur 2: in einer Schnittzeichnung einen Hohlprofilkörper eines Dachholms mit eingesetzter Versteifungsleiste in U-Profil;
- Figur 3: in einer Schnittzeichnung einen Hohlprofilkörper eines Dachholms mit angesetzter Winkelleiste, die als Versteifungsleiste dient und
- Figur 4: in einer Schnittzeichnung einen Hohlprofilkörper eines Dachholms mit einer weiteren Variante einer angesetzten Winkelleiste, die als Versteifungsleiste dient.

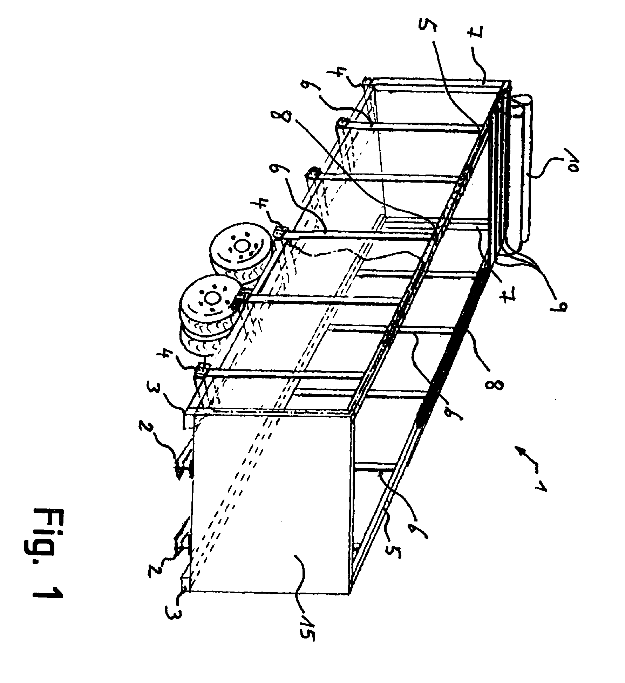

Figur 1 zeigt einen Planenaufbau 1 für ein Lastfahrzeug mit festen Wänden 15 an den Enden des Aufbaus, umfassend ein Chassis mit Hauptchassisträgern 2, Außenrahmenprofilen 3 und Bodenquerträgern 4, sowie oberhalb der Außenrahmenprofile 3 parallel zu diesen verlaufende Dachholme 5, und an den Seiten des Lastfahrzeugs 1 zwischen Außenrahmenprofilen 3 und profilartigen Dachholmen 5 vertikal angeordnete Mittelrungen 6 und an den Ecken des Fahrzeugs angeordnete Eckrungen 7 mit im Mittelbereich des Fahrzeuges an den Dachholmen 5 zum Inneren des Fahrzeuges hin angesetzten Versteifungsleisten 8.

Die Dachholme 5 sind als Laufschienen ausgebildet, über die mit Rollen versehene Planenspriegel 9 laufen, um den Planenaufbau 1 mit einer Plane 10 für einen Be- oder Entladevorgang von oben öffnen bzw. schließen zu können.

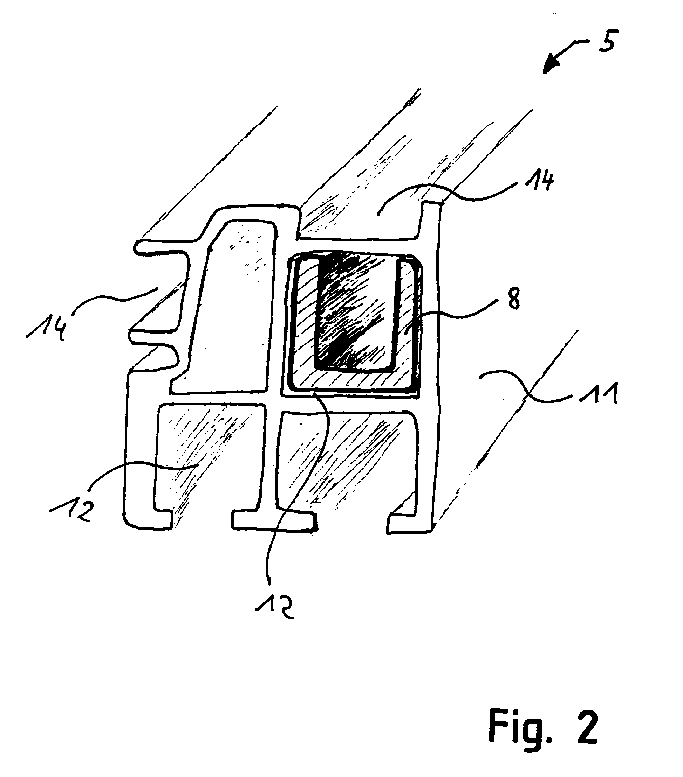

In der Figur 2 ist ein Hohlprofilkörper 11 eines Dachholms 5 in einer Schnittzeichnung dargestellt, der durch Einsetzten einer als U-Profil ausgebildeten Versteifungsleiste 8 in einen Hohlraum 12 des Hohlprofils versteift ist. Natürlich kann die Versteifungsleiste 8 auch einen rechteckigen, runden oder gewinkelten Querschnitt aufweisen, der eine ausreichende Stabilität der Versteifungsleiste 8 gewährleistet. Der Hohlprofilkörper 11 ist so ausgebildet, dass er als Laufschiene 14 für mit Rollen versehene Planenspriegel 9 dient.

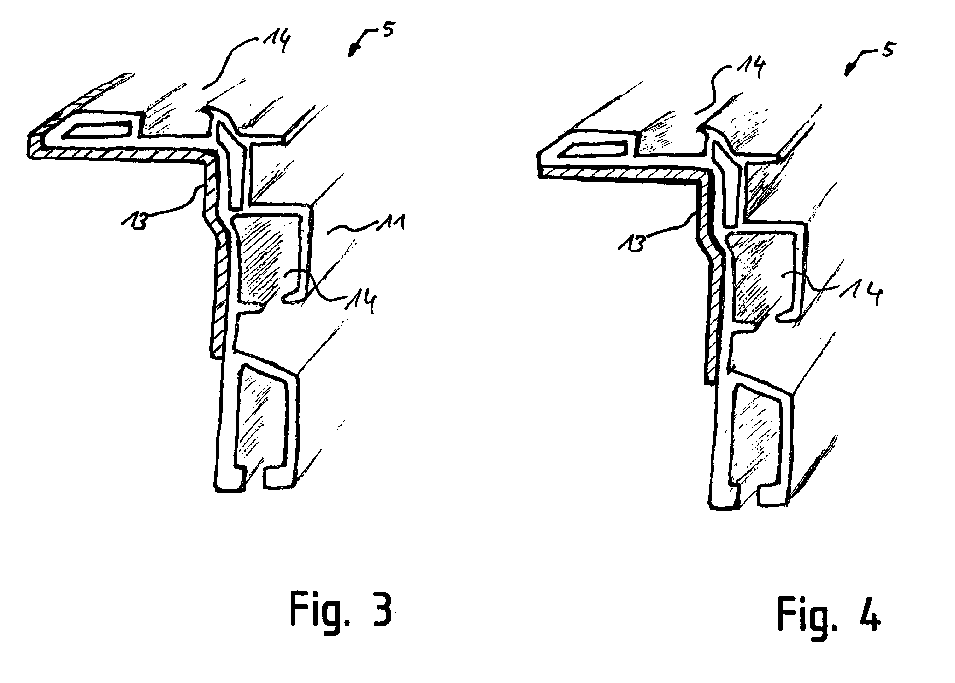

In der Figur 3 und Figur 5 sind Varianten eines als Dachholm 5 ausgebildeten Hohlprofilkörpers 11 dargestellt, an die eine Winkelprofilleiste 13 angesetzt ist, die als Versteifungsleiste 8 dient. Vorzugsweise wird die Winkelprofilleiste 13 mit dem Hohlprofilkörper 11 vernietet. Die Winkelprofilleiste kann aber auch mit dem Hohlprofilkörper 11 verschraubt oder sogar mit diesem verklebt sein.

Die Versteifungsleiste 8 kann natürlich auch an den Dachholmen 5 geklippt sein oder über entsprechend ausgestaltete Verbindungselemente, wie beispielweise durch Ausbildung einer Nut und einer Feder, auf oder in den Dachholmen eingeschoben sein.

In der in Figur 3 dargestellten Variante der Winkelprofilleiste 13 umkragt diese den Hohlprofilkörper 11, was zu einer erhöhten Stabilität führt.

Es sei nochmals darauf hingewiesen, dass auch eine Kombination der Versteifungsleisten denkbar ist, nämlich ein Ansetzen einer Versteifungsleiste an den als Hohlprofilkörper ausgebildeten Dachholm und ein Einsetzen einer weiteren Hohlprofilleiste in einen Hohlraum des Dachholms.

## Patentansprüche

1. Planenaufbau (1) für ein Lastfahrzeug, umfassend ein Chassis mit Hauptchassisträgern (2) , Außenrahmenprofilen (3) und Bodenquerträgern (4), sowie oberhalb der Außenrahmenprofile(3) parallel zu diesen verlaufende Dachholme (5), und an den Seiten des Lastfahrzeugs zwischen Außenrahmenprofilen (3) und profilartigen Dachholmen (5) vertikal angeordnete Mittelrungen (6) und an den Ecken des Fahrzeugs angeordnete Eckrungen (7),
**dadurch gekennzeichnet, dass** die Dachholme (5) mindestens eine jeweils mit dem Dachholm (5) an- oder eingesetzte Versteifungsleiste (8) umfassen, die parallel zu den Dachholmen (5) liegt.

2. Planenaufbau (1) nach Anspruch 1, **dadurch gekennzeichnet, dass** die Versteifungsleiste (8) im Mittelbereich der Dachholme (5) zwischen zwei im Abstand zu den Eckrungen (7) stehenden Mittelrungen (6) eingesetzt ist.

3. Planenaufbau (1) nach einem der Ansprüche 1 bis 2, **dadurch gekennzeichnet, dass** die Versteifungsleiste (8) eine Winkelprofilleiste (13) ist, die an die Außen- oder Innenseite der Dachholme (5) angeschlagen ist.

4. Planenaufbau (1) nach Anspruch 1 oder 3, **dadurch gekennzeichnet, dass** die Dachholme (5) Hohlprofilkörper (11) sind, die gleichzeitig Laufschienen (14) für mit Rollen versehene Planenspriegel (9) sind, und dass die Versteifungsleiste (8) in einen Hohlraum (12) der Dachholme (5) eingeschoben ist.

5. Planenaufbau (1) nach einem der Ansprüche 1 bis 4, **dadurch gekennzeichnet, dass** im Fahrzustand des Lastfahrzeugs die Mittelrungen (6) exakt auf der Höhe der Bodenquerträger (4) angeordnet sind.

6. Planenaufbau (1) nach einem der Ansprüche 1 bis 5, **dadurch gekennzeichnet, dass** die Versteifungsleiste (8) aus Stahl oder Aluminium besteht.

7. Planenaufbau (1) nach einem der Ansprüche 1 bis 6, **dadurch gekennzeichnet, dass** der Planenaufbau (1) an wenigstens einem Ende mit festen Wänden (15), Türen oder Planenendstücken mit Diagonalverband abgeschlossen ist.

8. Planenaufbau (1) nach einem der Ansprüche 1 bis 7, **dadurch gekennzeichnet, dass** die Bodenquerträger (4) zwischen den Hauptchassisträgern (2) und den Außenrahmenprofilen (3) zueinander beabstandet über die gesamte Länge des Lastfahrzeuges angeordnet sind.
